Europäisches Patentamt

European Patent Office

Office européen des brevets

(19)

(11) Veröffentlichungsnummer: **0 270 938 B1**

# EUROPÄISCHE PATENTSCHRIFT

(12)

(45) Veröffentlichungstag der Patentschrift: 03.04.91

(51) Int. Cl.⁵: **F16J 15/32**

(21) Anmeldenummer: 87117472.8

(22) Anmeldetag: 26.11.87

(54) **Radialwellendichtring für aggressive Medien.**

(30) Priorität: 01.12.86 DE 3641060

(43) Veröffentlichungstag der Anmeldung:
15.06.88 Patentblatt 88/24

(45) Bekanntmachung des Hinweises auf die
Patenterteilung:
03.04.91 Patentblatt 91/14

(84) Benannte Vertragsstaaten:
FR GB IT

(56) Entgegenhaltungen:
EP-A- 0 123 724
EP-A- 0 133 928
DE-A- 2 743 501
DE-A- 3 402 366
GB-A- 2 153 020

(73) Patentinhaber: **Elring Dichtungswerke GmbH**
**Höhenstrasse 24**
**W-7012 Fellbach(DE)**

(72) Erfinder: **Brandtner, Jakob**
**Sucystrasse 24**
**W-7120 Bietigheim-Bissingen(DE)**
Erfinder: **Schuhmacher, Walter**
**Lindenstrasse 55**
**W-7120 Bietigheim-Bissingen(DE)**

(74) Vertreter: **Hoeger, Stellrecht & Partner**
**Uhlandstrasse 14 c**
**W-7000 Stuttgart 1(DE)**

## Beschreibung

Die Erfindung betrifft einen Radialwellendichtring für aggressive Medien mit einem ringförmigen Gehäuse aus einem chemisch verhältnismäßig wenig resistenten Kunststoff und einem am Gehäuse fest angeordneten, ringförmigen Dichtelement aus chemisch resistentem Polytetrafluoräthylen (PTFE).

Ein solcher Radialwellendichtring ist beispielsweise aus der DE-A 34 02 109 bekannt. Das ringförmige Dichtelement aus PTFE ise dabei in ein Gehäuse aus Polypropylen eingesetzt, dessen radial nach innen gerichtete Schenkel einen nach außen weisenden Flansch des Dichtelements beidseits umgreifen und dichtend zwischen sich festlegen. Die Beständigkeit dieses Radialwellendichtrings gegen aggressive Medien ist nicht durch das an sich chemisch sowie thermisch universell resistente PTFE-Material bestimmt, sondern vielmehr durch die Widerstandsfähigkeit des Kunstoff-Gehäuses. Somit ist ein derartiger Radialwellendichtring nicht mehr universell einsetzbar und die Vorteile des PTFE-Materials können nicht voll ausgenutzt werden.

Es ist Aufgabe der Erfindung, einen gattungsgemäßen Radialwellendichtring so zu verbessern, daß er auch gegen hochaggressive Medien universell eingesetzt werden kann.

Die Aufgabe wird erfindungsgemäß dadurch gelöst , daß das PTFE-Material des Dichtelements die mit aggressiven Medien in Kontakt gelangenden Teile des Gehäuses an dessen Stirnseite und äußerer Umfangsfläche als Schutzschicht überdeckt, und der vom Dichtelement überdeckte Teil der äußeren Umfangsfläche des Gehäuses eine Dichtstrecke und der freiliegende Teil dieser Umfangsfläche eine Zentrier- und Passungsstrecke bilden.

Bei einer bevorzugten Ausführungsform der Erfindung gemäß Anspruch 3 überdeckt das Dichtelement auch noch wenigstens einen Teil der äußeren Umfangsfläche des Gehäuses und bewirkt somit eine statische Dichtheit des Kunstoffgehäuses gegen Kreichleckage am Außendurchmesser der Dichtung, beispielsweise zu einem Maschinengehäuse hin, wobei auch diese Abdichtung gegenüber chemisch aggressiven Medien beständig ist.

Insgesamt wird bei dem erfindungsgemäßen Radialwellendichtring die fast universelle Beständigkeit des PTFE-Dichtelements auch auf das Kunstoffgehäuse, welches vorzugsweise aus duroplastischem Material gefertigt ist, übertragen, indem die durch das aggressive Medium gefährdeten Kunstoffteile mit einer Schutzschicht aus PTFE überzogen werden, wobei diese Schutzschicht gleichzeitig ein Teil der PTFE-Dichtlippe ist. Der PTFE-Überzug schirmt somit das Kunststoffgehäuse gegenüber dem aggressiven Medium ab, so daß der Radialwellendichtring nunmehr universell eingesetzt werden kann. Außerdem ergibt sich em Gehäuseumfang eine Zentrierund Paßstrecke, während die erwähnte Dichtstrecke aus PTFE eine statische Abdichtung gegenüber aggressiver Kreichleckage bildet.

Ein weiterer Vorteil des erfindungsgemäßen Radialwellendichtrings besteht darin, daß er in einfacher, konventioneller Weise, insbesondere auch in Serienproduktion hergestellt werden kann.

Die nachstehende Beschreibung bevorzugter Ausführungsformen der Erfindung dient im Zusammenhang mit. beiliegender Zeichnung der weiteren Erläuterung. Es zeigen:

Fig. 1  eine schaubildliche Ansicht einer ersten Ausführungsform eines Radialwellendichtrings;

Fig. 2  eine abgewandelte Ausführungsform eines Radialwellendichtrings mit Dicht- und Paßstrecke;

Fig. 3  einen nach zwei Seiten hin wirksamen Radialwellendichtring;

Fig. 4  einen Radialwellendichtring mit zwei Dichtlippen;

Fig. 5  einen Radialwellendichtring ähnlich Fig. 4 mit zusätzlicher, statisch wirkender Dichtlippe und

Fig. 6  eine besonders bevorzugte Ausführungsform eines Radialwellendichtrings mit nach einwärts verlegter Position der Dichtlippe.

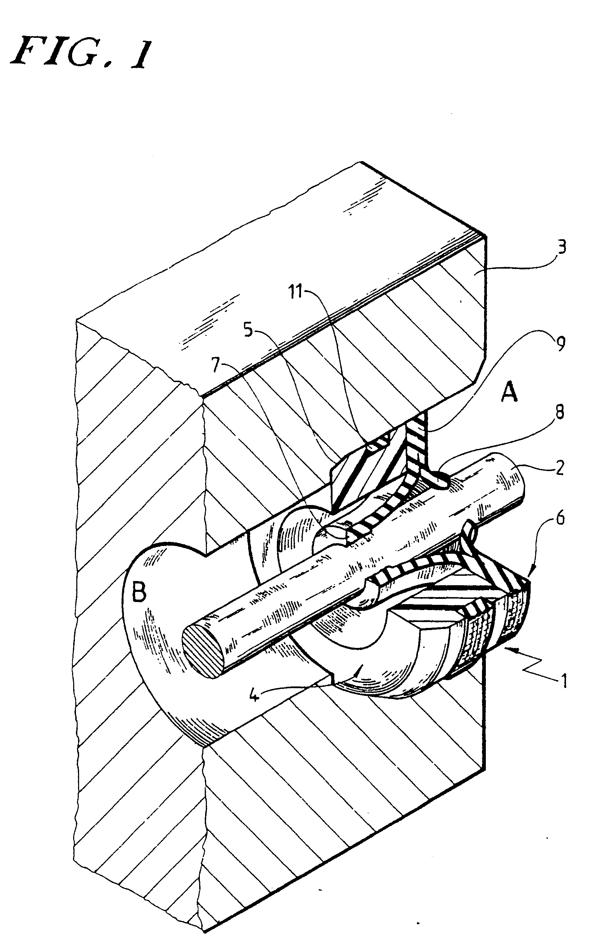

Der in Fig. 1 dargestellte Radialwellendichtring 1 ist zwischen einer drehend gelagerten Welle 2 und einem ortsfesten Maschinenteil 3 in herkömmlicher Weise angeordnet. Grundsätzlich könnte bei dieser und allen im nachfolgenden beschriebenen Ausführungsformen die Welle 2 auch eine ortsfeste Achse sein, um welche der Maschinenteil 3 rotiert. Der Radialwellendichtring 1 umfaßt ein formstabiles Gehäuse 4, das mit einer abgeschrägten Stirnkante 5 an einer im Maschinenteil ausgebildeten Stufe anliegt und aus duroplastischem oder thermoplastischem Kunststoff gefertigt sein kann. Duroplasten werden als Material für das Gehäuse 4 bevorzugt.

Wie dargestellt, ist das Kunststoffgehäuse 4 mit einem ringförmigen Dichtelement 6 aus Polytetrafluoräthylen (PTFE) fest verbunden. Das Dichtelement 6 weist eine in das Innere des Gehäuses 4 hineinragende, die Welle 2 abdichtend umschließende Dichtlippe 7 sowie eine mit dieser Lippe einstückige Schutzlippe 8 auf, die ebenfalls gleitend an der Welle 2 anliegt. Weiterhin überdeckt ein ringförmer Bereich 9 des Dichtelements 6 die der abgeschrägten Stirnkante 5 gegenüberliegende Stirnseite des Kunststoffgehäuses 4.

Der Radialwellendichtring 1 dichtete ein auf seiner Seite B befindliches Medium, z. B. Öl, gegen die gegenüberliegende Seite A ab. Dabei verhindert der auf der Seite A die Stirnwand des Gehäuses 4 als Schutzschicht überziehende Bereich 9 des Dichtelementes 6, daß ein auf der Seite A vorhandenes aggressives Medium , das aus einem chemisch verhältnismäßig wenig resistenten Kunststoff bestehende Gehäuse 4 angreift.

Das Dichtelement 6 übt also bei dem dargestellten Radialwellendichtring 1 drei Funktionen aus: Es dichtet die Welle 2 radial zur Seite B hin ab, schützt weiterhin das empfindliche Kunststoffgehäuse 4 auf der Seite A vor einem dort vorhandenen aggressiven Medium und ergibt wegen der Lippe 8 eine zusätzliche Schutzwirkung.

Wie weiterhin aus Fig. 1 hervorgeht, kann in einer Nut am Außenumfang des Gehäuses 4 zwecks statischer Abdichtung gegenüber einer Kreichleckage eine Dichtung 11 angeordnet werden, und zwar in Form eines schmalen Schlauchabschnitts oder auch eines O-Rings. Die Dichtung 11 kann beispielsweise aus einem elastomeren Material oder ebenfalls aus PTFE bestehen oder mit PTFE ummantelt sein.

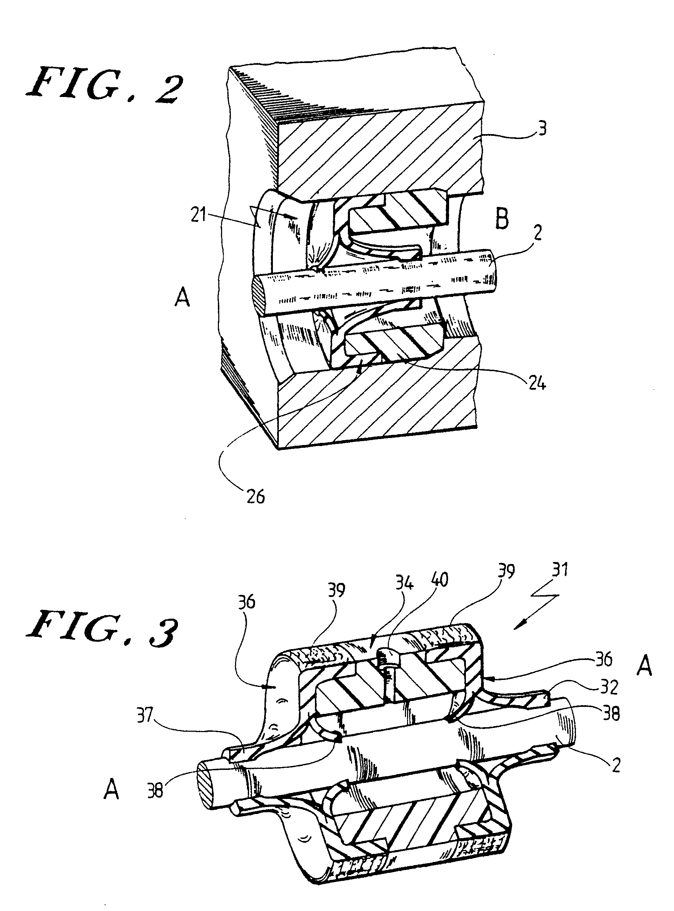

Die in Fig. 2 dargestellte, bevorzugte Ausführungsform eines Radialwellendichtrings 21 unterscheidet sich von der Ausführungsform gemäß Fig. 1 im wesentlichen dadurch, daß ein ringförmiges Dichtelement 26 aus PTFE nicht nur die der Seite A zugekehrte Stirnfläche des Kunstoffgehäuses 24, sondern auch noch einen Teil der äußeren Umfangsfläche dieses Gehäuses überdeckt und somit dort ebenfalls eine Abdichtungsfunktion übernimmt, für die bei der Ausführungsform gemäß Fig. 1 die Abdichtung 11 vorgesehen ist. Im übrigen wirkt der Dichtring gemäß Fig. 2 ebenso wie der Dichtring gemäß Fig. 1

Die Fig. 3 zeigt einen Radialwellendichtring 31, der in der Lage ist, nach zwei Seiten (A) eine wirksame, radiale Abdichtung gegenüber verschiedenen, aggressiven Medien zu vermitteln, Hierzu sind die beiden einander gegenüberliegenden Stirnseiten eines Gehäuses 34 aus chemisch und thermisch verhältnismäßig wenig resistentem Kunststoff vollständig von zwei als Schutzschicht wirkenden Dichtelementen 36 aus PTFE überdeckt, wobei jedes Dichtelement 36 wiederum eine Dichtlippe 37 und eine Schutzlippe 38 umfaßt sowie mit einem Bereich 39 einen Teil der äußeren Umfangsfläche des Kunststoffgehäuses 36 abdeckt. Die erwähnten Teile 37, 38 und 39 sind einstückige Bestandteile der Dichtelemente 36. Die Bereiche 39 vermitteln wiederum eine statische Abdichtung gegenüber einer Kreichleckage.

Wie dargestellt, weist das Kunststoffgehäuse 34 zwischen den beiden Dichtelementen 36 eine abgestufte Bohrung 40 zur Spülung und Reinigung des zwischen den Dichtelementen 36 im Inneren des Gehäuses 34 liegenden Raumes auf.

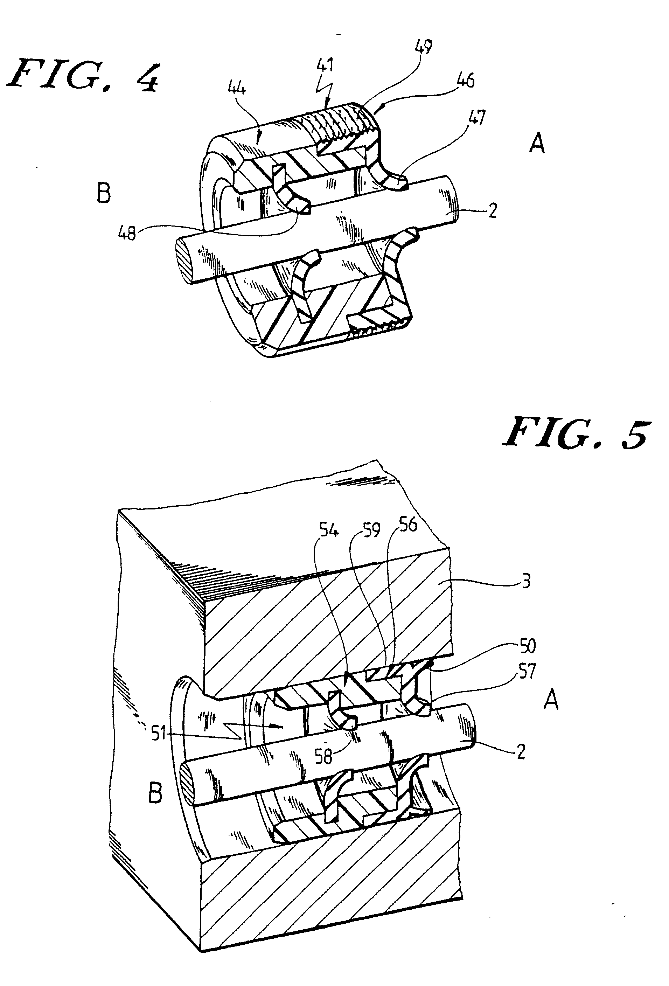

Der in Fig. 4 dargestellte Radialwellendichtring 41 dient der Abdichtung eines auf seiner Seite A befindlichen, chemisch oder thermisch aggressiven Mediums. Wiederum ist ein Kunststoffgehäuse 44 an seiner dem aggressiven Medium zugewandten Stirnseite und auf einem Teil seiner äußeren Umfangsfläche von einem ringförmigen Dichtelement 46 aus PTFE überdeckt und hierdurch gegen das aggressive Medium geschützt. Der einen Teil der äußeren Umfangsfläche des Gehäuses 44 überdeckende Bereich 49 des Dichtelements 46 kann in bekannter Weise eine periphere Dichtprofilierung, beispielsweise in Gestalt einer Rillierung, aufweisen, wodurch die statische Abdichtwirkung verbessert wird. Das Dichtelement 46 liegt mit einer Dichtlippe 47 an der Welle 2 abdichtend an. Außerdem ist das Kunststoffgehäuse 44 mit einer zweiten Dichtlippe 48, vorzugsweise ebenfalls aus PTFE versehen.

Der Radialwellendichtring 51 gemäß Fig. 5 unterscheidet sich von dem Dichtring 41 nach Fig. 4 im wesentlichen dadurch, daß an einem die eine Stirnseite eines Kunststoffgehäuses 54 überdeckenden Dichtelementes 56 außer einer Dichtlippe 57 noch eine zusätzliche Druckdichtungslippe 50 einstückig vorgesehen ist. Unter dem auf der Seite A des aggressiven Mediums herrschenden Druck legt sich diese Druckdichtungslippe 50 eng an die Innenwandung des Maschinenteils 3 an und verbessert hierdurch die statische Abdichtung. Außerdem weist der Radialwellendichtring 51, ähnlich wie der Dichtring 41 in Fig. 4 noch eine zusätzliche, an der Welle 2 anliegende Dichtlippe 58 auf. Der gegen das Maschinenteil 3 abdichtende Bereich 59 des Dichtelements 56 kann, ebenso wie der Bereich 49 in Fig. 4 eine (nicht dargestellte) periphere Dichtprofilierung aufweisen. Eine solche Dichtprofilierung kann natürlich in entsprechender Weise bei allen Ausführungsformen der hier vorgeschlagenen Radialwellendichtringe vorgesehen werden.

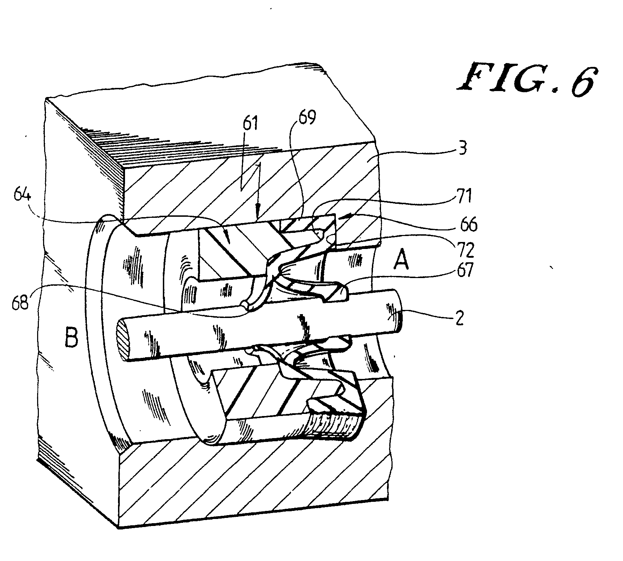

Bei der bevorzugten Ausführungsform einen Radialwellendichtrings 61 gemäß Fig. 6 ist die der mit aggressivem Medium beaufschlagte Seite A eines Kunstoffgehäuses zugeordnete Stirnseite 64 wiederum mit einem ringförmigen Dichtelement 66 aus PTFE überzogen, wobei dieses Dichtelement eine an der Welle 2 anliegende Dichtlippe 67, eine Schutzlippe 68 sowie einen die äußere Umfangsfläche des Gehäuses 64 teilweise überdeckenden Bereich 69 umfaßt, der seinerseits eine Dichtprofilierung aufweisen kann. Wie dargestellt, ist das Gehäuse 64 an seiner vom Dichtelement 66 überdeckten Stirnseite axial nach einwärts gezogen, und das Dichtelement folgt der Kontur des Gehäuses ebenfalls axial nach einwärts. Hierdurch wird die Position der Dichtlippe 67 auf der Welle 2 bestimmt. Gleichzeitig entsteht durch diese axial nach einwärts gezogene Stirnseite des Kunststoffgehäuses 64 ein vom Dichtelement 66 überdeckter Ringsteg 71. Wird für die Herstellung des Kunstoffgehäuses 64 ein entsprechend elastisches Material gewählt und der Ringsteg 71 bei noch nicht eingesetztem Radialwellendichtring so geformt, daß er geringfügig radial nach auswärts gerichtet ist, so kann hierdurch die radiale Anpreßkraft des Dichtelements (Bereich 69) am Außenumfang des Kunstoffgehäuses 64 bestimmt werden. In Fig. 6 ist in dem rechts unten gelegenen Bereich des Radialwellendichtrings 61 angedeutet, wie der nicht vom Maschinteil 3 umschlossene Bereich des Dichtelements 66 radial nach auswärts gekehrt ist. Beim Einsetzen des Dichtrings wird der Ringsteg 71 etwas radial nach einwärts gebogen, so daß das Dichtelement 66 fest zwischen Gehäuse 64 und Maschinenteil 3 eingespannt ist, wie dies in Fig. 6 im rechts oben gelegenen Bereich des Dichtrings 61 dargestellt ist.

Ebenso wie bei den bereits beschriebenen Radialwellendichtringen wirkt der vom Dichtelement 66 überdeckte Teil der äußeren Umfangsfläche des Gehäuses 64 als Dichtstrecke. Der freiliegende Teil dieser Umfangsfläche dient als Zentrier- und Passungsstrecke beim Einbau des Radialwellendichtrings.

Bei der Ausführungsform gemäß Fig. 6 weist eine den Radialwellendichtring aufnehmende Bohrung im Maschinenteil 3 eine Stufe 72 auf. Gegen die radial gerichtete Fläche dieser Stufe liegt der den Ringsteg 71 überdeckende Teil des Dichtelements 66 an. Beim Einbau des Radialwellendichtrings auf Anschlag vermittelt somit das Dichtelement 66 eine zusätzliche axiale Dichtung. In Fig. 6 könnte auf der Seite A des Radialwellendichtrings 61 beispielsweise Salzsäure, auf der Seite B Luft vorhanden sein.

Wie weiterhin aus Fig. 6 hervorgeht, weist die Bohrung des Maschinenteils 3, welche den Radialwellendichtring 61 aufweist, auf der links gelegenen Seite B eine Abschrägung auf, welche die Einführung des Radialwellendichtrings erleichtert. Enstprechend könnte auch die radial außen gelegene Kante des Dichtelements 66 abgeschrägt sein, wodurch der Einbau des Dichtrings ebenfalls erleichtert wäre. Die vom Ringsteg 71 auf des Dichtelement 66 ausgeübte, elastische Wirkung vermindert im übrigen die Kaltflußneigung des PTFE-Materials, aus welchem dieses Dichtelement 66 gefertigt ist.

Alle beschriebenen Radialwellendichtringe werden in einfacher und gleicher Weise hergestellt: Man dreht auf einem Drehautomaten zunächst eine plane Manschette aus PTFE-Material, welche das Dichtelement, z.B. das Dichtelement 66 darstellt. Anschliessend wird diese Manschette in bekannter Weise in einem Ätzbad (z. B. in Ammoniak gelöstes Natrium) ganzflächig geätzt. Schließlich wird die Manschette in ein Preßwerkzeug eingelegt und ohne Haftvermittler im Preß-, Spritz-oder Spritzpreßverfahren mit dem das Gehäuse, z.B. das Gehäuse 64 bildenden Kunststoff verbunden.

Nachstehend werden die durch die Erfindung vermittelten Vorteile noch einmal zusammengefaßt: Aufgrund des dem Kunststoffgehäuse erteilten Schutzes durch das PTFE-Material des Dichtelements können für die Herstellung dieses Gehäuses sowohl Duroplaste als auch Thermoplaste verwendet werden, was einen universellen Einsatz der Radialwellendichtringe ermöglicht. Die mit dem PTFE-Schutz versehenen Radialwellendichtringe können auch bei höheren Medientemperaturen verwendet werden, da PTFE ein guter thermischer Isolater ist. Die Haftfestigkeit zwischen der das Dichtelement bildenden PTFE-Manschette und dem das Gehäuse bildenden Kunststoft ist hervorragend. Da kein Haftvermittler benötigt wird, ist die Herstellung sehr einfach. Bei der Ausführungsform gemäß Fig. 6 ist bei einem Einbau des Radialwellendichtrings auf Anschlag die PTFE-Dichtlippe 67 durch das überstehende Kunststoffgehäuse geschützt. Das gleiche gilt auch für die PTFE-Schutzlippe 68. Außerdem kann bei der Ausführungsform gemäß Fig. 6 durch die konstruktive Gestaltung des Ringsteges 71 die für die statische Abdichtung der PTFE-Dichtstrecke notwendige Dichtkraft eingestellt werden. Somit wird ein Kaltfließen des PTFE's vermieden. Einbauschrägen am Gehäuseaußendurchmesser können im Preßwerkzeug angepreßt werden und ermöglichen eine unkomplizierte Montage des Radialwellendichtrings. Die beschriebenen Radialwellendichtringe lassen sich insbesondere auf Preßautomaten besonders kostengünstig herstellen.

## Ansprüche

1. Radialwellendichtring für aggressive Medien mit einem ringförmigen Gehäuse (4) aus einem chemisch verhältnismäßig wenig resistenten Kunststoff und einem am Gehäuse (4) fest angeordneten, ringförmigen Dichtelement (6) aus chemisch resistentem Polytetrafluoräthylen (PTFE),

   **dadurch gekennzeichnet,**

   daß das PTFE-Material des Dichtelements (6) die mit aggressiven Medien in Kontakt gelangenden Teile des Gehäuses (4) an dessen Stirnseite und äußerer Umfangsfläche als Schutzschicht überdeckt, und der vom Dichtelement (6) überdeckte Teil der äußeren Umfangsfläche des Gehäuses (4) eine Dichtstrekke und der freiliegende Teil dieser Umfangsfläche eine Zentrier-und Passungsstrecke bilden.

2. Radialwellendichtring nach Anspruch 1, dadurch gekennzeichnet, daß das Dichtelement (6) eine Dichtlippe (7) und eine mit dieser einstückig verbundene Schutzlippe (8) aufweist.

3. Radialwellendichtring nach Anspruch 1, dadurch gekennzeichnet, daß der die äußere Umfangsfläche des Gehäuses (44) überdeckende Teil (49) des Dichtelements (46) eine Dichtprofilierung aufweist.

4. Radialwellendichtring nach Anspruch 1, dadurch gekennzeichnet, daß am Außenumfang des Dichtelements (56) eine gegen druckbeaufschlagte Medien statisch abdichtende Lippe (50) vorgesehen ist.

5. Radialwellendichtring nach Anspruch 1, dadurch gekennzeichnet, daß das Gehäuse (64) an seiner vom Dichtelement (66) überdeckten Stirnseite axial nach einwärts gezogen und hierdurch die Position der Dichtlippe (67) bestimmt ist.

6. Radialwellendichtring nach Anspruch 5, dadurch gekennzeichnet, daß durch die axial nach einwärts gezogene Stirnseite des Gehäuses (64) ein elastischer, vom Dichtelement (66) überdeckter Ringsteg (71) ausgebildet ist, der die radiale Anpreßkraft des Dichtelements (66) am Außenumfang des Gehäuses (64) bestimmt.

7. Radialwellendichtring nach Anspruch 6, dadurch gekennzeichnet, daß der den Ringsteg (71) überdeckende Teil des Dichtelements (66) bei Einbau der Radialwellendichtung auf Anschlag zusätzlich eine axiale Dichtung vermittelt.

## Claims

1. A radial shaft sealing ring, for aggressive media, comprising an annular housing (4), made of a plastic having a relatively low chemical resistance, and an annular sealing element (6), made of chemically resistant polytetrafluoroethylene (PTFE), permanently fixed on the housing (4), characterized in that the PTFE material of the sealing element (6) covers the parts of the housing (4) which come into contact with aggressive media, on its end face and outer peripheral surface, as a protective layer, and the portion of the outer peripheral surface of the housing (4) covered by the sealing element (6) forms a sealing section and the portion of these peripheral surfaces which is not covered forms a centering and fitting section.

2. A radial shaft sealing ring according to claim 1, characterized in that the sealing element (6) comprises a sealing lip (7) and a protective lip (9) connected in one piece with the latter.

3. A radial shaft sealing ring according to claim 1, characterized in that the part (49) of the sealing element (46) which covers the outer peripheral surface of the housing (44) comprises a specially profiled sealing surface.

4. A radial shaft sealing ring according to claim 1, characterized in that on the outer periphery of the sealing element (56) there is a lip (50) which provides a static seal against pressurised media.

5. A radial shaft sealing ring according to claim 1, characterized in that the housing (64) is drawn out axially inwards at its end face covered by the sealing element (66) and the position of the sealing lip (67) is determined thereby.

6. A radial shaft sealing ring according to claim 5, characterized in that, by means of the end face of the housing (64) which is drawn out axially inwards, a resilient circular land (71) is formed which is covered by the sealing element (66) and which determines the radial pressure of the sealing element (66) on the outer periphery of the housing (64).

7. A radial shaft sealing ring according to claim 6, characterized in that the part of the sealing element (66) which covers the circular land (71) provides, in addition, on installation of the shaft end radial sealing ring, an axial seal on a limiting stop.

## Revendications

1. Anneau d'étanchéité a lèvres pour milieux agressifs avec un corps annulaire (4) en matière plastique relativement peu résistante chimiquement et un élement d'étanchéité annulaire (6) en polytétrafluoroéthylène (PTFE) chimiquement résistant réuni fermement au corps (4), caractérisé en ce que la matière en PTFE de l'élément d'étanchéité (6) couvre comme une couche protectrice les parties du corps (4) entrant en contact avec des milieux agressifs sur sa face frontale et sa surface périphérique extérieure, et la partie de la surface périphérique extérieure du corps (4), couverte par l'élément d'étanchéité (6), constitue un tronçon d'étanchéité et la partie libre de cette surface périphérique un tronçon de centrage et d'ajustement.

2.  Anneau d'étanchéité a lèvres selon la revendication 1, caractérisé en ce que l'élément d'étanchéité (6) a une lèvre d'étanchéité (7) et une lèvre de protection (8) réunie en une seule pièce avec cette dernière.

3.  Anneau d'étanchéité à lèvres selon la revendication 1, caractérisé en ce que la partie (49) de l'élément d'étanchéité (46) couvrant la surface périphérique extérieure du corps (44) présente un profil favorable à l'étanchéité.

4.  Anneau à lèvres selon la revendication 1, caractérisé en ce qu'il est prévu à la périphérie extérieure de l'élément d'étanchéité (56) une lèvre (50) exerçant une action d'étanchéité statique vis-à-vis des milieux fournis sous pression.

5.  Anneau d'étanchéité à lèvres selon la revendication 1, caractérisé en ce que le corps (64) est étiré en sens axial vers l'intérieur à sa face frontale couverte par l'élément d'étanchéité (66) et il détermine de cette façon la position de la lèvre d'étanchéité (67).

6.  Anneau d'étanchéité a lèvre selon la revendication 5, caractérisé en ce que la face frontale du corps (64) étirée en sens axial vers l'intérieur constitue une nervure annulaire (71) élastique couverte par l'élément d'étanchéité (66), qui détermine la force de pression radiale de l'élément d'étanchéité (66) sur la périphérie extérieure du corps (64).

7.  Anneau d'étanchéité à lèvres selon la revendication (6), caractérisé en ce que la partie de l'élément d'étanchéité (66) couvrant la nervure annulaire (71) assure en plus une étanchéité en sens axial par le montage en butée de l'anneau d'étanchéité à lèvres.

# FIG. 1

FIG. 2

FIG. 3

# FIG. 4

# FIG. 5

FIG. 6